# EUROPÄISCHE PATENTANMELDUNG

(11) **EP 1 902 979 A1**
(43) Veröffentlichungstag der Anmeldung: **26.03.2008**
(21) Anmeldenummer: 07018158.1
(22) Anmeldetag: 15.09.2007
(51) Int. Cl.: B65G 47/08, B65G 47/51, B65G 47/82

(54) **Verfahren und Vorrichtung zum Zwischenspeichern und Bereitstellen von Reihen**

(30) Priorität: 22.09.2006 DE 102006045277
(71) Anmelder: Winkler + Dünnebier Aktiengesellschaft, 56562 Neuwied (DE)
(72) Erfinder: Salm, Thomas, Dr.-Ing., 52074 Aachen (DE); Driessen, Hans-Josef, 52249 Eschweiler (DE)

(57) **Zusammenfassung**

Es wird ein Verfahren und eine Vorrichtung zum Zwischenspeichern und Bereitstellen von flachen, gestapelten Gegenständen, insbesondere Briefhüllen, Verpackungsbeutel und dergleichen beschrieben, wobei die aus einer Produktionsmaschine kommenden flachen Gegenstände, mit einer ihrer Kanten auf einer Stapelfläche (4) abgestellt werden, und anschließend von einer Vorrichtung zum Bilden und Bereitstellen von definierten Reihen (1) auf einen Übergabeplatz (A) transportiert werden. Von dort werden die Reihen (1), mit einer Transportvorrichtung, die vom Maschinentakt unabhängig angetrieben ist, auf einen Speicher- (C) oder den Abgabeplatz (B) geschoben.

## Beschreibung

### I. Anwendungsgebiet

Die vorliegende Erfindung betrifft ein Verfahren sowie eine Vorrichtung zum Zwischenspeichern und Bereitstellen von Reihen, die aus flachen, in Stapeln zugeführten Gegenständen, wie insbesondere Briefhüllen, Verpackungsbeuteln, Kartonagezuschnitten und dergleichen, abgetrennt werden.

### II. Technischer Hintergrund

Maschinen zum Herstellen von flachen Gegenständen, wie z.B. Briefhüllen, bilden in der Regel am Ausgang der Maschine einen Stapel, der durch die kontinuierlich ankommenden Produkte gebildet wird. Um aus diesem kontinuierlich ankommenden Stapel Reihen zu bilden, die anschließend automatisch oder von Hand in Kartons verpackt werden, sind verschiedene Verfahren und Vorrichtungen bekannt.

Aus der DE 41 17 434 A1 ist ein Verfahren und eine Vorrichtung zum Bilden, Halten, Trennen und Transportieren von Stapeln bekannt, wobei aus dem am Ausgang einer Produktionsmaschine gebildeten Stapel mittels mehrerer Stapelstützen ein(e) Teilstapel/Reihe gebildet wird, der/die in einen Versammlungsbereich geschoben wird. Die Verfahrenschritte wie auch der Aufbau der Vorrichtung sind an den Maschinentakt gebunden. Das bedeutet, der Bediener oder auch eine Übernahmevorrichtung müssen die Reihe innerhalb eines Zeitfensters entnehmen, ansonsten muss die Produktionsmaschine stoppen, was den Produktionswirkungsgrad erheblich reduziert.

Eine andere bekannte Vorrichtung bewirkt ein Ausstellen eines Briefumschlages nach einer bestimmten Anzahl von Briefumschlägen, die dann eine Reihe bilden. Dabei wird das vorlaufende Ende des Stapels durch eine verschiebbare Stapelstütze gehalten. Der Stapel besteht somit aus einer angefangenen Reihe und aus einer oder mehren fertigen Reihen, die z.B. durch ausgestellte Briefumschläge getrennt sind. Die Länge der Ablagefläche bestimmt somit die Länge des Stapels, und somit die Größe des Speichers. Da hier kein definierter Abgabeplatz vorhanden ist, müssen die Reihen von Hand aus dem Stapel entnommen, auf das Kartoninnenmaß zusammengepresst und in den Karton eingeschoben werden. Je nach Länge des Stapels wandert die Entnahmestelle und damit die Arbeitsposition des Bedienungspersonals, was die Arbeit für den Bediener zusätzlich erschwert.

Aus der EP 0 981 480 B1 ist eine Vorrichtung zum Verpacken von flachen Gegenständen bekannt, die Teilstapel von einem Stapel trennt, der von kontinuierlich ankommenden Produkten gebildet wird, die Teilstapel um eine Achse wendet und jeden zweiten Teilstapel um eine zweite Achse schränkt, so dass eine aus Teilstapeln gebildete Reihe entsteht, wobei benachbarte Teilstapel eine gegensinnige Kantenorientierung aufweisen. Die fertigen Reihen werden dann maschinentaktabhängig zum Verpacken bereitgestellt, so dass auch diese Vorrichtung maschinentaktabhängig ist.

### III. Darstellung der Erfindung

### a) Technische Aufgabe

Es ist daher die Aufgabe der vorliegenden Erfindung, ein Verfahren bzw. eine Vorrichtung zum Zwischenspeichern und Bereitstellen von flachen, gestapelten Gegenständen, insbesondere Briefhüllen, Verpackungsbeutel oder dergleichen zu schaffen, das bzw. die eine vom Maschinentakt unabhängige Entnahme fertiger Reihen an einer definierten Abgabestelle erlaubt.

### b) Lösung der Aufgabe

Diese Aufgabe wird mittels des Verfahrens mit den Merkmalen des Anspruchs 1 bzw. mittels einer Vorrichtung mit den Merkmalen des Anspruchs 6 gelöst. Weitere Ausgestaltungen der vorliegenden Erfindung ergeben sich aus den Unteransprüchen.

Danach sieht die Erfindung vor, dass fertige Reihen, die im Maschinentakt auf dem Übergabeplatz bereitgestellt werden, unabhängig vom Maschinentakt auf den Abgabeplatz verschoben werden.
Zusätzlich sind zwischen dem Übergabeplatz und dem Abgabeplatz ein oder mehrere Speicherplätze vorgesehen, um die Entnahme der Reihen am Abgabeplatz noch stärker vom Maschinentakt zu entkoppeln.

Eine Reihe besteht aus einer bestimmten Anzahl von flachen, gestapelten Gegenständen, zum Beispiel Briefumschlägen, wie sie von einer Briefhüllenherstellungsmaschine mit Reihen- und/oder Teilstapelbildungsvorrichtung üblicherweise zur Verfügung gestellt werden. Wobei eine Reihe aus mehreren Teilstapeln bestehen kann, die unterschiedliche Kantenorientierung haben können und/oder durch Trennpappen getrennt sind.

Erfindungsgemäß erfolgt die Entnahme von fertigen Reihen an einem definierten Abgabeplatz, auf dem die Reihen unabhängig vom Maschinentakt entnommen werden können. Dabei kann die Entnahme von Hand oder maschinell erfolgen. Zur besseren Entnahme kann zudem am Abgabeplatz eine Kippvorrichtung vorgesehen werden, welche die Reihe so kippt, dass der Bediener den leeren Verpackungskarton nur noch um z.B. 90° kippen, über die Reihen schieben und den gefüllten Karton wieder in Ausgangsposition abstellen muss.

Der Transport der Reihen vom Übergabeplatz zum Abgabeplatz oder zu einem Speicherplatz erfolgt vorzugsweise mittels einer Schiebevorrichtung, welche die Reihen quer zur Richtung der Stapelbildung verschiebt. Zum Führen und Halten der Stapel sind im Bereich der Speicherplätze und des Abgabeplatzes Führungen vorgesehen. Im Bereich des Übergabeplatzes werden die Reihen von den Haltestützen der Längsschiebevorrichtung, welche die Reihen vom Versammlungsbereich zum Übergabeplatz transportiert, oder durch eine zusätzliche bewegliche Stütze-/Führungsvorrichtung, gehalten und geführt.
Die Reihen werden in der Regel auf dem Versammlungsplatz auf das vorgesehene Kartoninnenmaß komprimiert/entlüftet, können aber auch mittels entsprechend angeordneter Führungen auf der Strecke vom Übergabeplatz zum Abgabeplatz komprimiert/entlüftet werden.
Alternativ zur Positionierung von Abgabeplatz und Speicherplätzen in Querrichtung ist auch eine Positionierung in Längsrichtung denkbar, dann sind aber zusätzliche Vorrichtungen erforderlich, um die gleiche Funktionalität zu erhalten.

Die Speicherwirkung tritt bereits dadurch ein, dass eine fertige Reihe unabhängig vom Maschinentakt auf den Abgabeplatz geschoben wird, sobald ein Sensor der Steuerung der Schiebevorrichtung meldet, dass auf dem Abgabeplatz keine Reihe mehr vorhanden ist. So ist es möglich, alle fertigen Reihen innerhalb einer relativ kurzen Zeit zu entnehmen und die Zeit, bis zum erneuten Füllen des Übergabeplatzes und des Abgabeplatzes für andere Tätigkeiten zu verwenden, wie z.B. die Vorbereitung neuer Verpackungskartons, die Palettierung von befüllten Kartons oder auch die Bedienung einer zweiten Produktionslinie.

Zur Vergrößerung der Speicherwirkung können weitere Speicherplätze zwischen Übergabeplatz und Abgabeplatz vorgesehen werden.
Sind ein oder mehrere Speicherplätze vorhanden, wird eine fertige Reihe bei leerem Speicher und leerem Abgabeplatz von dem Übergabeplatz direkt auf den Abgabeplatz geschoben. Anschließend wird der Speicher von dem Abgabeplatz her befüllt, wobei Sensoren der Steuerung der Schiebevorrichtung melden welche Speicherplätze belegt sind, so dass die Schiebevorrichtung die Reihen soweit in den Speicher schiebt, das keine Speicherlücke entsteht.
Entnimmt der Bediener nun einen Stapel, meldet der Sensor dies an die Steuerung der Schiebevorrichtung und diese hat nun zwei Möglichkeiten den Abgabeplatz wieder mit einer Reihe zu befüllen. Sind alle Speicherplätze leer, wartet die Schiebevorrichtung bis eine Reihe auf dem Übergabeplatz bereitgestellt wird und schiebt diese dann direkt bis auf den Abgabeplatz. Sind im Speicher eine oder mehrere Reihe(n) vorhanden, wird die vorderste Reihe direkt oder mittels der davorliegenden Reihen von der Schiebevorrichtung auf den Abgabeplatz geschoben.

So kann der Bediener nicht nur in besonders vorteilhafter Weise die fertigen Reihen entsprechend seines Arbeitstempos in Verpackungskartons verpacken, sondern obendrein die Zeit, die zum Wiederbefüllen aller Speicherplätze notwendig ist, dazu nutzen, anderen Tätigkeiten nachzugehen, etwa dem Bedienen einer anderen Maschine.

### c) Ausführungsbeispiele

Nachfolgend werden einige Ausführungsformen der vorliegenden Erfindung beispielhaft anhand der beigefügten Zeichnungen beschrieben. Es zeigen:
- Fig. 1:: in Draufsicht eine Skizze der Speichervorrichtung
- Fig. 2:: eine Seitenansicht auf die Speichervorrichtung mit Schiebevorrichtung
- Fig. 3:: eine Seitenansicht auf die Speichervorrichtung mit Schiebevorrichtung und Kippvorrichtung
- Fig. 4:: Draufsicht auf zwei parallele Produktionsmaschinen die von einem Bediener bedient werden

Im Folgenden werden Ausführungsformen der vorliegenden Erfindung beispielhaft in Zusammenhang mit der Herstellung von Briefhüllen beschrieben.
Im Rahmen der vorliegenden Erfindung .sind jedoch auch andere Anwendungsfälle denkbar, wie beispielsweise in Zusammenhang mit der Herstellung von Flaschenetiketten oder Faltschachtelzuschnitten für Arzneimittelschachteln.

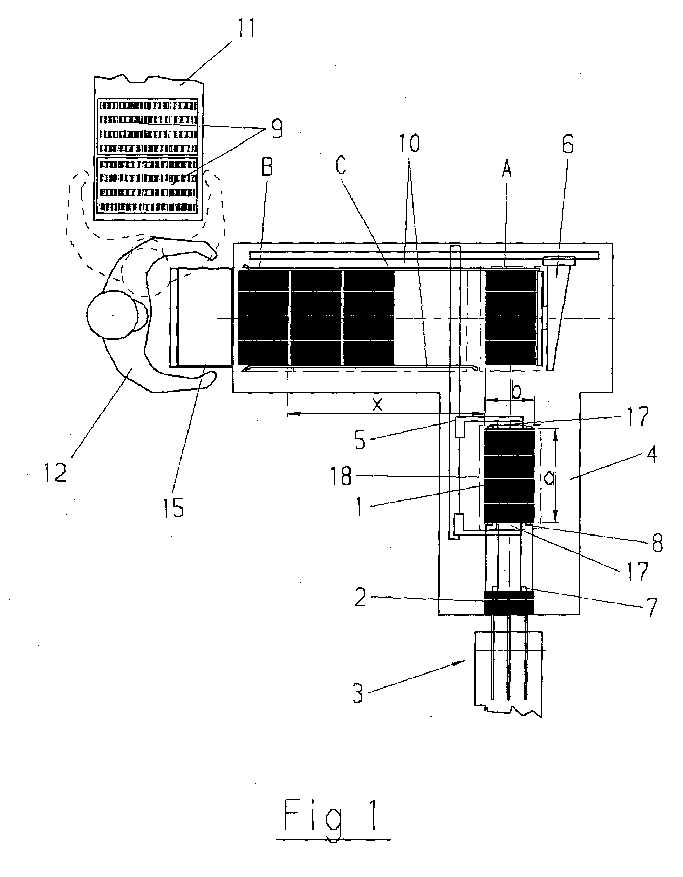

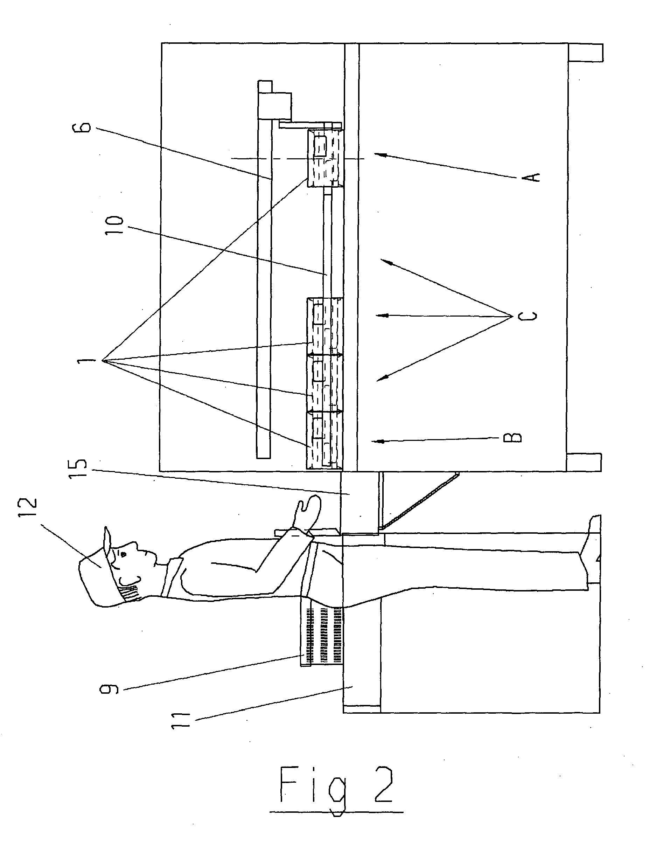

Fig. 1 zeigt eine schematische Darstellung der Draufsicht auf die Speichervorrichtung mit der definierten Abgabestelle an dem Abgabeplatz A. Bei allen in Fig. 1-4 gezeigten Vorrichtungen handelt es sind um grundsätzlich bekannte Maschinenteile.
Die kontinuierlich ankommenden Produkte werden am Ausgang der Produktionsmaschine 3 mit einer Kante auf der Stapelfläche 4 abgestellt. Eine Vorrichtung wie aus der DE 41 17 434 A1 bekannt stellt dann eine Reihe 1 auf dem Versammlungsbereich 18 bereit. Von dort wird diese mittels einer Längsschiebevorrichtung 5 zum Übergabeplatz A verschoben und solange mittels der Haltestützen 17 oder einer weiteren bewegbaren Halteeinrichtung gehalten, bis die Schiebevorrichtung 6 die Reihe 1 ausreichend weit in die Führung 10 geschoben hat, dass die Reihe 1 von dieser gehalten wird. '
Die Schiebevorrichtung 6 schiebt die Reihe 1 anschließend weiter bis auf den Abgabeplatz B oder auf den vom Abgabeplatz B aus gesehen nächsten freien Speicherplatz C.
Aus Fig. 1 +2 ist unter anderem der besonders vorteilhafte Arbeitsablauf für den Bediener zu entnehmen.
Die auf dem Abgabeplatz B bereitgestellten Reihen 1 werden vom Bediener 12 aufgenommen und in den bereitgestellten Verpackungskarton eingeschoben, der anschließend auf einem Bandtransport 11 zum Weitertransport abgestellt wird. Damit die Reihen 1 vom Bediener 12 leicht und sicher aufgenommen werden können, ist es erforderlich, dass die Kantenorientierung so gewählt wird, dass beim Aufnehmen der Reihe 1 diese nicht auseinander fällt, wie es z.B. der Fall ist, wenn alle Schlussklappen von Briefumschlägen nach unten zeigen, und dadurch die Reihe 1 unten breiter ist als oben. Die Kantenorientierung kann z.B. durch eine Wendevorrichtung, wie in EP 0981 480 B1 beschrieben, zwischen dem Ausgang der Produktionsmaschine 3 und Übergabeplatz A, optimiert werden.

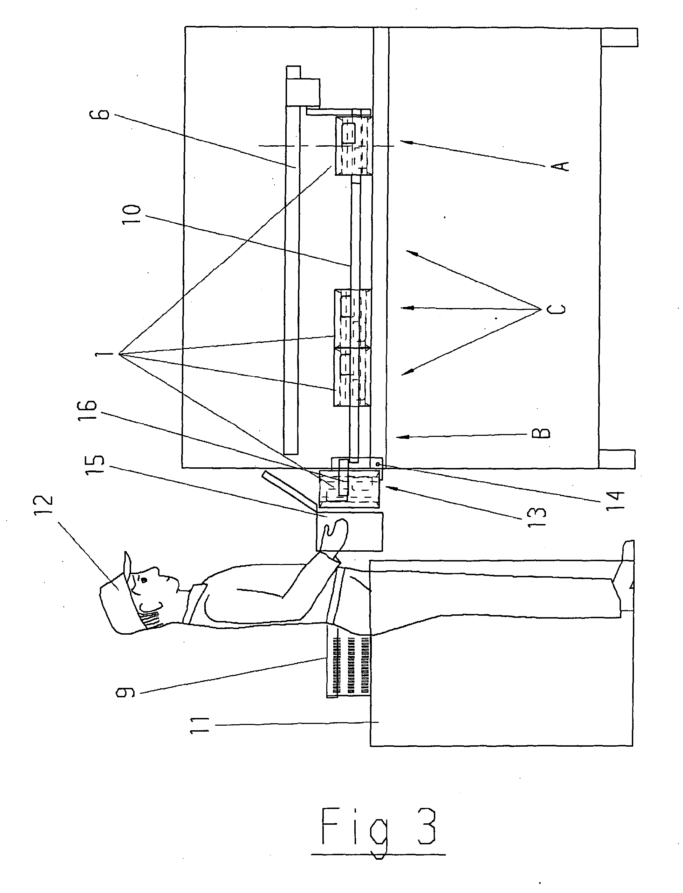

Eine weitere Ausführungsform wird in Fig. 3 gezeigt. Hier erfolgt die Bereitstellung der Reihen 1 mittels einer Kippvorrichtung, welche eine Reihe 1 von dem Abgabeplatz B aufnimmt und um die Achse (13) um vorzugsweise 90° kippt. Dadurch braucht der Bediener die Reihe 1 nicht mehr aufnehmen, sondern kann den Verpackungskarton einfach über die Reihe 1 schieben. So können auch Reihen 1 mit ungewendeten Briefumschlägen sicher verpackt werden.

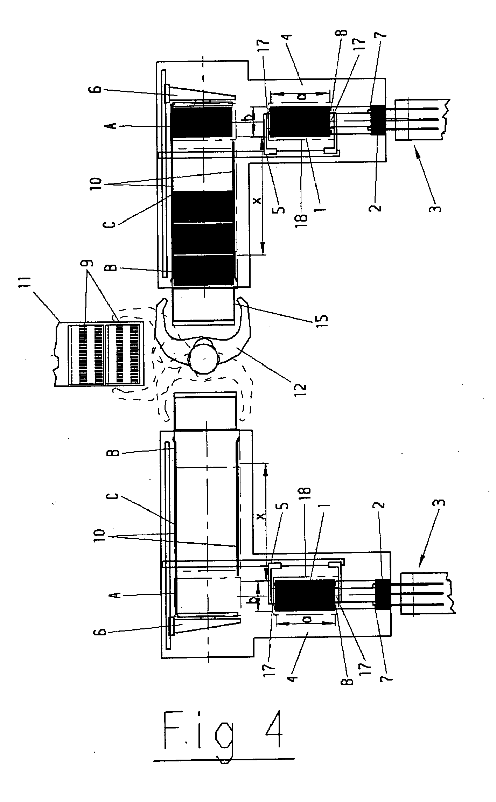

In Fig. 4 sind zwei parallele Herstellungsmaschinen dargestellt, an die jeweils eine erfindungsgemäße Vorrichtung in spiegelbildlicher Ausführung anschließt, die dann von einem Bediener bedient werden. Bei dieser Anordnung ist für zwei Produktionsmaschinen z.B. nur ein Bandtransport 11 zum Abtransport der verpackten Reihen 9 notwendig.
Anstelle des Bedieners kann aber auch ein Roboter eingesetzt werden, der in der Zeit des Speicherfüllens andere Tätigkeiten ausführen kann wie z.B. vorbereiten einer neuen Palette.

Aus den voranstehend beschriebenen Ausführungsbeispielen ergeben sich insbesondere die folgenden Vorteile gegenüber dem Stand der Technik:
- Der Bediener oder eine ergänzende Automatisierungskomponente muss nicht mehr im Takt arbeiten
- Ergonomische Arbeitsplatzausführung mit einer Reduktion der Arbeitsbelastung
- Vermeidung unnötiger Maschinen-Stopps, dadurch höhere Wirtschaftlichkeit (weniger Abfall)
- Dem Bediener bleibt Zeit für andere Tätigkeiten

### BEZUGSZEICHENLISTE

- 1: Reihe
- 2: Stapel
- 3: Ausgang Produktionsmaschine
- 4: Stapelfläche/Ablagefläche
- 5: Längsschiebevorrichtung
- 6: Schiebevorrichtung
- 7: Haltefinger
- 8: Trennfinger
- 9: Verpackte Reihe
- 10: Führung
- 11: Bandtransport
- 12: Bediener
- 13: Kippvorrichtung
- 14: Kippachse
- 15: Verpackungskarton
- 16: Seitenführung
- 17: Haltestütze
- 18: Versammlungsbereich

- A: Übergabeplatz
- B: Abgabeplatz
- C: Speicherplatz
- a,b: Reihenabmaße
- x: Abstand

## Patentansprüche

1. Verfahren zum Zwischenspeichern und Bereitstellen von flachen, gestapelten Gegenständen, insbesondere von aus Briefhüllen, Verpackungsbeutel und dergleichen bestehenden Reihen (1), die getaktet, stückzahlgerecht und mit der gewünschten Orientierung der Kanten auf einem Übergabeplatz (A) bereitgestellt werden und von dort direkt oder über mind. einen Speicherplatz (C) zu einem Abgabeplatz (B) transportiert werden
**dadurch gekennzeichnet, dass**
eine Reihe (1) unabhängig von Maschinentakt von dem Übergabeplatz (A) oder von einem Speicherplatz (C) um mindestens eine Reihenbreite (a,b) auf oder in Richtung des Abgabeplatzes (B) bewegt wird, sobald sich auf dem Abgabeplatz (B) keine Reihe (1) mehr befindet und/oder eine neue Reihe (1) auf dem Übergabeplatz (A) bereit steht, wobei bei einem Abstand (x) von mehr als einer Reihenbreite (a,b) zwischen dem Übergabeplatz (A) und dem Abgabeplatz (B), die in Transportrichtung gesehen davor befindliche(n) Reihe (1) oder Reihen mit Hilfe der zuletzt fertiggestellten Reihe (1) weiterbewegt wird/werden.

2. Verfahren nach Anspruch 1
**dadurch gekennzeichnet, dass**
die Reihen (1) auf den Abgabeplatz (B) bzw. auf Speicherplätze (C) bewegt werden, die quer zur Richtung der Stapelbildung liegen.

3. Verfahren nach den Ansprüche 1
**dadurch gekennzeichnet, dass**
eine neue Reihe (1) auf dem Übergabeplatz (A) vorrangig auf einen leeren Speicherplatz (C) bewegt wird.

4. Verfahren nach Anspruch 1
**dadurch gekennzeichnet, dass**
die Reihe (1) an dem Abgabeplatz (B) um eine Achse (14) gekippt wird, die parallel zur Reihenbildung verläuft.

5. Verfahren nach Anspruch.1
**dadurch gekennzeichnet, dass**
an dem Abgabeplatz (B) eine Reihe (1) entnommen werden kann, während eine neue Reihe (1) in Richtung Abgabeplatz (B) oder Speicherplatz (C) bewegt wird.

6. Vorrichtung zum Zwischenspeichern und Bereitstellen von flachen, gestapelten Gegenständen, insbesondere Briefhüllen, Verpackungsbeutel und dergleichen, wobei die aus einer Produktionsmaschine kommenden flachen Gegenstände mit einer ihrer Kanten auf einer Stapelfläche (4) abgestellt werden, bestehend aus einer Vorrichtung zum Bilden und Bereitstellen von definierten Reihen (1) auf einen Übergabeplatz (A) und einer Transportvorrichtung zum transportieren der Reihen (1) auf einen Abgabeplatz (B)
**dadurch gekennzeichnet, dass**
der Transporteinrichtung ein Antrieb zugeordnet ist, der diese unabhängig vom Maschinentakt bewegt.

7. Vorrichtung nach Anspruch 6,
**dadurch gekennzeichnet, dass**
die Transporteinrichtung eine Schiebevorrichtung (6) ist, welche die Reihen (1) quer zur Richtung der Stapelbildung verschiebt.

8. Vorrichtung nach Anspruch 6,
**dadurch gekennzeichnet, dass**
an dem Abgabeplatz (B) eine Kippvorrichtung (13) angeordnet ist, die um eine parallel zur Reihenbildung verlaufende Achse (14) kippbar ist.

9. Vorrichtung nach Anspruch 6,
**dadurch gekennzeichnet, dass**
die Kippvorrichtung (13) unabhängig vom Maschinentakt und von der Schiebevorrichtung (6) angetrieben ist.

10. Vorrichtung nach Anspruch 7,
**dadurch gekennzeichnet, dass**
die Schiebevorrichtung (6) jede Position zwischen Übergabeplatz (A) und Abgabeplatz (B) anfahren kann.
